# EUROPEAN PATENT SPECIFICATION

(11) **EP 2 375 118 B1**
(45) Date of publication and mention of the grant of the patent: **19.12.2012**
(21) Application number: 10003776.1
(22) Date of filing: 08.04.2010
(51) Int. Cl.: F16L 11/04, C08L 27/06, C08L 97/02, C08K 5/00, C08K 5/12

(54) **Use of a thermoplastic PVC compound with vegetables fillers for manufacturing flexible hoses and method thereof**
Verwendung eines thermoplastischen PVC-Compound mit pflanzlichen Füllstoffen für die Herstellung von flexiblen Schläuchen und Verfahren dafür
Utilisation d'un composite de PVC thermoplastique avec des agents de remplissage végétaux pour la fabrication de tuyeaux flexibles et procédé pour les préparer

(43) Date of publication of application: 12.10.2011
(73) Proprietor: FITT SPA, 36066 Sandrigo (Vicenza) (IT)
(72) Inventor: Mezzalira, Alessandro, 36066 Ancignano di Sandrigo (VI) (IT); Mascolo, Rita, 36016 Thiene (Vicenza) (IT)
(74) Representative: Autuori, Angelo

(56) References cited:
- US-A- 3 786 011
- DATABASE WPI Week 199942 Thomson Scientific, London, GB; AN 1999-502450 XP002603224 -& JP 11 217477 A (ZEON KASEI KK) 10 August 1999 (1999-08-10)
- DATABASE WPI Week 200535 Thomson Scientific, London, GB; AN 2005-337996 XP002603225 -& JP 2005 113050 A (YAZAKI CORP) 28 April 2005 (2005-04-28)
- DATABASE WPI Week 200056 Thomson Scientific, London, GB; AN 2000-589546 XP002603226 -& JP 2000 169648 A (SUMITOMO BAKELITE CO LTD) 20 June 2000 (2000-06-20)
- DATABASE WPI Week 199936 Thomson Scientific, London, GB; AN 1999-423728 XP002603227 -& JP 11 170452 A (MITSUBISHI KASEI VINYL KK) 29 June 1999 (1999-06-29)
- DATABASE WPI Week 200533 Thomson Scientific, London, GB; AN 2005-318521 XP002603228 -& JP 2005 097461 A (YAZAKI CORP) 14 April 2005 (2005-04-14)

## Description

### Field of the invention

The present invention relates to the art of plastic materials, and particularly relates to the use of a thermoplastic PVC compound with vegetable fillers to make flexible hoses and a flexible hose formed of such compound.

### Background of the invention

It is known that, in the art of plastic material, one or more fillers are added to the a polymeric composition in order to improve the mechanical properties thereof.

Generally speaking, the fillers used in the known art are of the inorganic type. In particular, in the field of the PVC compositions, calcium carbonate is normally used as filler. However, in day-by-day practice, the use of such a filler has demonstrated a series of drawbacks.

First of all, it may comprise silicates compounds, that are abrasive for the tools and machines by which the PVC calcium carbonate containing-composition is worked. Moreover, due to the very small average particle size, the calcium carbonate is very dangerous for the operators involved with its handling. To this hand, very strict safety conditions must be observed and safe devices must be used, which inevitably slow the whole production process.

Furthermore, the extraction and working of the calcium carbonate has a great environmental impact. Due to its inorganic nature, the calcium carbonate extraction sites need thousands of years to renew their original aspects.

From JP11217477 a PVC composition is known comprising a PVC matrix, a plasticizer agent and a vegetable filler, namely wood flour, which is 15-150 wt.pts. based on 100 wt. pts. of the PVC matrix. This known composition, which also comprises a relatively high amount of titanium oxide and coloring pigment, is used as a molding compound for manufacturing handrail core materials.

From JP2005113050 a PVC composition is known comprising a PVC matrix, a vegetable filler, namely wood flour, and a plasticizer agent which is 20-40 wt.pts. based on 100 wt. pts. of the PVC matrix. This known composition is used for manufacturing electric wire cables.

From JP2000169648 a PVC composition is known comprising a PVC matrix, a plasticizer agent, a stabilizer agent and a vegetable filler, namely wood flour. This known composition, which also comprises a relatively high amount of metal hydroxide, is used as a coating material for power cords.

From JP11170452 a PVC composition comprising a PVC matrix, a plasticizer agent, a stabilizer agent and a vegetable filler, namely wood flour. This known composition, which also comprises a UV absorber agent, is laminated onto a resin body to give a woody aspect thereto.

From JP2005097461 a PVC flame-retardant composition is known comprising a PVC matrix and a vegetable filler, namely wood flour. The latter is impregnated with a flame-retardant liquid prior to the incorporation into the PVC matrix.

From US3786011 a PVC compound is known comprising a PVC matrix, a plasticizer agent, an elastomer and a vegetable filler, namely natural fibres. This known composition is used for manufacturing a synthetic pitch of field for ball sports, such as cricket or tennis.

### Summary of the invention

The object of the present invention is to overcome the above drawbacks, by providing a thermoplastic compound that is highly efficient and relatively cost-effective.

A particular object is the use of a thermoplastic compound having a minimum environmental impact for manufacturing a flexible hose.

A further object is the use of a thermoplastic compound having good mechanical properties for manufacturing a flexible hose.

A further object is the use of a thermoplastic compound that is relatively safe to handle by the operators involved in its preparation for manufacturing a flexible hose.

A further object is the use of a thermoplastic compound having a minimum impact on the machines and apparatuses used for its preparation for manufacturing a flexible hose.

A further object is the use of a thermoplastic compound that can be produced in high quantities for manufacturing a flexible hose.

A further object is to provide a flexible hose formed of such thermoplastic compound.

Another object of the invention is to provide an effective and inexpensive flexible hose.

Yet another object of the invention is to provide a method of making a flexible hose with maximized throughput and minimized scrap.

These and other objects, as better explained hereafter, are fulfilled by the use of a plasticized compound according to the claim 1.

Generally speaking, the plasticized compound may comprise: (A) from 20% to 80% by weight, preferably 20% to 70% by weight, of a PVC matrix, (B) from 10% to 50% by weight, preferably 15% to 40% by weight, of a plasticizer agent and (C) from 0,1 % to 5% by weight, preferably from 0,1 to 3% by weight, of a stabilizer agent.

As used herein, the term "% by weight" and its derivatives is intended to indicate, unless otherwise indicated, the percentage by weight of a given component based on the total dry weight of the composition in which it is included.

As used herein, the term "PVC matrix" and its derivatives is intended to designate any resin or mixture of resins containing or consisting of polyvinyl chloride.

The PVC matrix may comprise polyvinyl chloride having a K value (measured according to DIN 53726) from 60 to 100, preferably from 70 to 80. Advantageously, the PVC matrix may comprise polyvinyl chloride having a K value of about 70.

The K value is a dimensionless index that can be directly related to the molecular weight of a PVC resin and is used to compare various types of PVC resins. It is determined according to the known standard DIN 53726.

Preferably, the PVC matrix may be of the suspension type, but it is also possible to have PVC matrix of both the suspension and emulsion type.

As used herein, the term "plasticizer agent" and its derivatives is intended to designate a compound or a mixture of compounds that can increase flexibility, processability and extensibility of the polymer in which it is incorporated. A plasticizer agent can reduce the viscosity of the melt, lower the second order transition temperatures and the elastic modulus of the product.

Any kind of plasticizer can be used in the present invention. However, preferably, a plasticizer agent (B) free from phthalate compounds can be used. In this manner, the composition can be non-toxic and non-polluting for the people and thinks that came into contact therewith.

Particularly, the plasticizer agent may be selected from the group comprising adipates, benzoates, 1,2-propanediol and/or 1,3- and/or 1,4-butanediol and/or polypropylene glycol polyesters with adipic acid, acetic acid or C10-C18 fatty acids or n-octanol and/or n-decanol, trimellitates, phosphates, sebacates, alkyl sulphonates, DINCH® and/or citrates, either alone or in combinations of two or more thereof.

It shall be understood that the plasticized agent may be a mixture of multiple compounds having a common base, such as a mixture of multiple monomeric or polymeric adipate compounds, or a mixture of monomer benzoate compounds.

Advantageously, the plasticizer agent (B) may comprise at least one plasticizer having vegetable origin, i.e. prepared starting from a compound having its origin from a vegetable plant.

As used herein, the term "stabilizer agent" and its derivatives is intended to designate a compound or a mixture of compounds that can intercept small molecules resulting from the degradation of the polymer, e.g. HCl, and form a more stable intermediate compound.

Advantageously, the stabilizer agent (C) may be of the Ca-Zn, Ba-Zn, Ca - organic, Tin type.

Preferably, the stabilizer agent will be of the Ca-Zn type and may include calcium stearate, zinc stearate and stearic acid.

The compound used in the present invention may comprise, in addition to the PVC matrix (A), plasticizer agent (B) and stabilizer agent (C), also one or more vegetable fillers (D).

As used herein, the term "vegetable filler" and its derivatives is intended to designate solid particulate or fibrous materials, substantially chemically inert, deriving from or having its origin from a vegetable plant.

The compound used in the present invention has a lower environmental impact with respect to the compounds belonging to the state of the art. In fact, the composition used in the present invention has less amount of products deriving from oil, as clearly demonstrated by the examples below. On the other hand, the vegetable filler is renewable each year, and does not need expensive and dangerous extraction operations.

Moreover, the vegetable filler is less abrasive for the apparatuses and machines by which the composition is worked with respect to the calcium carbonate.

Furthermore, the vegetable filler has generally an average particle size greater than the particle size of the calcium carbonate. As a consequence, the composition used in the present invention is more safe for the operators involved in the preparation thereof.

Preferably, the vegetable filler (D) has a particle size of 50 µ to 800 µ, preferably of 100 µ to 700 µ, more preferably of 150 µ to 600 µ and more preferably of 200 µ to 500 µ.

Surprisingly, the Applicant discovered that the PVC composition used in the present invention has a gelation time that is remarkably less than the gelation time of a conventional PVC compound, as clearly demonstrated by the examples below. This aspect is reflected positively in the production process of the compound, because at the same rpm screw extruder it is possible to increase productivity for the compounds according to the present invention or, equivalently, at the same production rate it is possible to decrease the energy consumption.

The gelation of a PVC's dryblend can be described as a process in which a PVC resin and plasticizer become a solid material with elastomeric properties upon being heated at an adequate temperature. This process takes place in different stages. The plasticizer penetrates into the PVC grains, swells them, increases their size, glues the particles together through a percolation process, and hence, decreases the relative amount of free plasticizer. During the heating process, PVC particles and plasticizer fuse to form a homogeneous material. At the same time, different structures resulting from the polymerization of PVC, such as grains, agglomerates, primary particles and the like, are successively destroyed.

However, the vegetable filler in a plasticized composition used in the present invention should be used in an amount not exceeding a given percentage by weight based on the total weight of the compound.

In fact, if used in an amount that exceed such a predetermined percentage, the humidity content and the great particle size of the vegetable filler may give rise to problems during the granulation and the extrusion process, as well as negatively influence the mechanical properties of the composition.

Generally speaking, the plasticized compound used in the present invention may have a Shore A hardness ranging between about 60 and about 90.

In general, the amount of the vegetable filler (D) in the composition may be of 0,1 % to 50% by weight, based on the total weight of the compound.

Preferably, the vegetable filler (D) In the plasticized PVC compound according to the present invention is from 1% to 10%, and more preferably from 3% to 7% by weight.

Suitably, the vegetable fillers can be flours and/or granules and/or fibers of: nut, coconut, almond, hazelnut, wood, cork, rice, corn starch, abaca, agave, agave henequen, esparto grass, pineapple, bamboo, banana, betel nut, hemp, sunn hemp, cotton Java, Indian grass, broom, hibiscus, hibiscus cannabina, jute, flax rod, luffa (vegetable sponge), okra (bahmia), date palm, (base of the leaf), oil palm, royal palm, switchgrass, Piassava, Ramie, or mixture or two or more thereof.

In order to lower the environmental impact of the PVC composition used in the present invention, the vegetable filler (D) may comprise vegetable wastes.

As used herein, the term "vegetable waste" and its derivatives is intended to designate vegetable materials, i.e. materials deriving from or having its origin from a vegetable plant, that for their nature are generally susceptible to be wasted.

Advantageously, the vegetable wastes may be chosen among the group consisting of: nutshell, coconut shell, almond shell, hazelnut shell, recycled wood, cherry stones, pomace, rice hulls.

The plasticized composition used in the present invention, in addition to the PVC matrix (A), the plasticizer agent (B), the stabilizer agent (C) and the one or more vegetable fillers (D), may comprise one or more additives (E).

They can be from 0 % (i.e. not present in the composition) to 50 % by weight, preferably 0,1% to 50% by weight, in the compound, based on the total weight thereof.

These additives (E) can be chosen among the group consisting of: co-stabilizers, inorganic fillers, heat stabilisers, UV stabilisers, external or internal lubricants, colorants, antioxidant agents, antimicrobial agents, anti-mold agents, anti-fungal agents, anti-bacteria agents, process adjuvants, blowing-expandent agents, chemical foaming agents. All these additives (E) are, per se, known to the person skilled in the art.

A suitable co-stabilizer agent can be may include epoxidized soybean oil, which may synergistically act with Ca-Zn stabilizer.

Inorganic fillers can include calcium carbonate, kaolin, talc, mica, feldspar, nepheline syenite, wollastonite, natural silica (quartz, microcrystalline quartz, opaline, ...), barite, ceramic, glass microspheres/fiber.

Such inorganic fillers may be used to improve the mechanical properties of the PVC compound used in the present invention. In fact, as clearly demonstrated by the example below, for the same specific weight and Shore A hardness, a PVC compound including only vegetable fillers has mechanical properties (such as, for example, the ultimate strength) which are less than a compound including both vegetable and inorganic fillers.

External or internal lubricants may include waxes, both of paraffin and polyethylene type, oils, esters or the like.

A suitable antimicrobial and/or anti-mold agent may be dichloro 2-noctyl-4-isothiazolin-3-one or silver-based antibacterial agent. The use of these additives may be useful to act against the natural tendency of some vegetable fillers to decompose or form fungi, mold and the like.

The antioxidant agent may represent from 0.1% to 3%, preferably from 0.5% to 1.5% and more preferably about 1% based on the total weight of the compound material.

As used herein, the term "antioxidant agent" and its derivatives is intended to designate a compound or a mixture of compounds that can intercept the first products of the reaction of the polymer in which it is incorporated with oxygen and to react therewith to form more stable intermediate compounds.

The antioxidant agents may include butylhydroxytoluene and/or may be of the phosphite type.

Furthermore, the compound material may contain 0.5% to 15%, and preferably 1% to 6% of hydrotalcite based on the total weight of the compound material. Hydrotalcite will be particularly useful for further stabilization of the compound, as it blocks the dehydrochlorination sites of PVC.

Preferably, the plasticizer agent may be different and separate from the stabilizer agent and/or the antioxidant agent, which means that the various agents may consist of different compounds or mixtures of compounds. On the other hand, one compound or one mixture of compounds may serve as multiple agents without departure from the scope as defined by the accompanying claims. For instance, one compound (or one mixture of compounds) may act both as a stabilizer agent and as an antioxidant agent.

The amount of vegetable filler (D) in the composition may depend on the thermoplastic matrix in which it is introduced. Generally speaking, the introduction in the PVC matrix (A) of at least one elastomer (F) compatible with the PVC may increase the percentage by weight of vegetable filler (D) in the PVC compound according to the present invention.

Accordingly, the plasticized composition in addition to the PVC matrix (A), the plasticizer agent (B), the stabilizer agent (C), the one or more vegetable fillers (D) and possibly the one or more additives (E), may comprise at least one elastomer (F) compatible with the PVC.

As used herein, the term "compatible" and its derivatives is intended to indicate the capability of two or more polymer substances to mix together without objectionable separation.

Compatible blends generally exhibit a single glass transition temperature (Tg) between the Tg's of the polymers in the blend, while incompatible blend will have two Tg's.

They can be from 0% (i.e. not present in the composition) to 40% by weight, preferably 0,1% to 35% by weight, in the compound, based on the total weight thereof.

These elastomers (F) compatible with the PVC can be chosen among the group consisting of: ABS (Acrylonitrile-Butadiene-Styrene), CPE (Chlorinated Polyethylene), EVA (Ethylene Vinyl Acetate), CSM (Chlorosulfonated Polyethylene), MBS (Methacrylate Butadiene Styrene Copolymer), TPU (Thermoplastic Polyurethane) elastomers, Polyester elastomers, such as Hytrel® by DuPont, PU (Polyurethane), PMMA (Poly Methyl Methacrylate), PCL (PolyCaproLactone).

Concerning the amount of vegetable filler in the composition according to the present invention, it is possible to establish that the vegetable filler (D) can be 0,1% to 35% by weight if the elastomer (F) is 0% (i.e. not present in the composition) or less than 5% by weight in the composition, and that the vegetable filler (D) can be 0,1% to 50% by weight if the elastomer (F) is 5% to 40% by weight in the composition.

One preferred compound may have the following composition:
(A) 30% to 70% by weight, preferably 35% to 65% by weight, of a PVC matrix;
(B) 20% to 50% by weight, preferably 20% to 40% by weight, of a plasticizer agent, preferably free from phthalate compounds;
(C) 0,1% to 5% by weight, preferably 0,1% to 3% by weight, of a stabilizer agent;
(D) 0,1% to 35% by weight, preferably 1% to 10% by weight, more preferably 3% to 7% by weight, of at least one vegetable filler;
(E) 0% to 50% by weight of one or more additives. the total of the percentages by weight of the components (A) to (E) being 100%.

An another preferred PVC composition may have the following composition:
(A) 10% to 60% by weight, preferably 20% to 50% by weight, of a PVC matrix;
(B) 10% to 40% by weight, preferably 10% to 30% by weight, of a plasticizer agent;
(C) 0,1% to 5% by weight, preferably 0,1% to 3% by weight, of a stabilizer agent;
(D) 0,1% to 50% by weight, preferably 0,1% to 40% by weight, more preferably 3% to 10% by weight, of at least one vegetable filler;
(E) 0% to 50% by weight of one or more additives;
(F) 5% to 40% by weight, preferably 10% to 30% by weight, of an elastomer;
the total of the percentages by weight of the components (A) to (F) being 100%.

In another aspect, a method for preparing the compound used in the invention comprises the steps of mixing and blending the PVC matrix (A), the plasticizer agent (B), the stabilizer agent (C), the at least one vegetable filler (D) and possibly the additives (E) and/or the elastomer (F), at a first maximum operating temperature, cooling and extruding the mixture so obtained at a second maximum operating temperature,

Suitably, the first maximum operating temperature can be of 90 °C to 120 °C, while the second maximum operating temperature can be of 160 °C to 230 °C.

Advantageously, the step of mixing the vegetable filler (D) can be accomplished only after the complete mixing of the PVC matrix (A), the plasticizer agent (B), the stabilizer agent (C) and possibly the additives (E). In fact, the vegetable filler (D) tends to absorb the plasticizer agent. As a consequence, the mechanical properties of the final PVC compound can be compromised. The same applies also to the elastomer (F), if present in the composition.

Therefore, in order to obtain a PVC compound having good mechanical properties, the vegetable filler (D) and, if present, the elastomer (F), can be inserted into the mixture only upon the complete absorption of the plasticizer (B) by the PVC matrix (A), the stabilizer agent (C) and possibly the additives (E). In this case, the manufacturing process can start with the mixing of the PVC matrix (A), the stabilizer agent (C) and possibly the additives (E), until a predetermined temperature, e.g. of about 60 °C, then the step of adding the plasticizer agent (B) is accomplished until its complete absorption.

The PVC compound material is used to manufacturing flexible hoses.

In another aspect, the invention relates to a hose for transporting liquids which comprises at least one layer made of a first thermoplastic material which includes, or consists of, the PVC compound of the invention. The hose can be of any type, either reinforced of not, or spirally-shaped.

Advantageously, the hose of the invention may include at least one second layer made of a second polyvinyl chloride-containing thermoplastic polymeric material which includes, or consists of, the PVC compound of the invention.

Particularly, the hose of the invention may be a garden hose which comprises an inner layer, an outer layer and a fibrous reinforcing layer therebetween. Both the inner and the outer layer may be made of a material which includes, or consists of, the PVC compound according to the present invention.

Advantageous embodiments of the invention are defined in accordance with the dependent claims.

The invention will be more in detail described with reference to the following examples.

### Examples

Several PVC plasticized compound have been prepared having a composition according to the following table 1 (all components are in % by weight based on the total weight of the composition). In the following examples the indicated materials were used as starting components.
*(A) PVC matrix:* PVC 271 PC commercialized by Solvin S.p.A.
*(B) Plasticizer agents:* DINCH® commercialized by BASF S.p.A.
   DIPLAST NS (DINP) commercialized by POLYNT S.p.A.
*(C) Stabilizer agent:* Ca/Zn stabilizer commercialized by Titanstuc S.a
*(D) Vegetable filler:* Hazelnut shell flour, average particle size 400µ, commercialized by Agrindustria S.n.c.
*(E) Inorganic filler:* Calcium carbonate 2TAV, , average particle size 5µ, commercialized by Omya S.p.A.
*(E) Co-stabilizer agent:* Epoxidized Soybean Oil Epoxol 6D commercialized by Faci S.p.A.
*(F) Elastomers:* ABS commercialized by L.G. Chem LTD

CPE commercialized by Brenntag S.p.A.

**TABLE 1**

| **Components** | **M1 %** | **M2 %** | **M3 %** | **M4 %** | **M5 %** | **M6 %** | **M7 %** | **M8 %** | **M9 %** | **M10 %** | **M11 %** | **M12 %** | **M13 %** | **M14 %** | **M15 %** | **M16 %** |
|---|---|---|---|---|---|---|---|---|---|---|---|---|---|---|---|---|
| **PVC** | 44.15 | 41.95 | 46.08 | 43.78 | 58.65 | 55.72 | 63.69 | 60.51 | 52.49 | 47.51 | 38.10 | 32.21 | 24.13 | 24.09 | 20.50 | 1701 |
| **CaCO3** | 28.70 | 27,27 | 20.97 | 19.92 | - | - | - | - | - | - | - | - | - | - | - | - |
| **DINCH** | 25,17 | 23,91 | 30,38 | 29,33 | - | - | 33,44 | 31,77 | - | - | - | - | - | - | 13,53 | 11,23 |
| **DINP** | - | - | - | - | 38,71 | 36,73 | - | - | 34,85 | 31,35 | 25,14 | 21,26 | 18,30 | 18,23 | - | - |
| **Ep. Soybean Oil** | 1.55 | 1.47 | 1.61 | 1.53 | 2.05 | 1.96 | 2.23 | 2.2 | 1.84 | 1.66 | 1.33 | 1.13 | 0.97 | 1.04 | 0.72 | 0.58 |
| **Ca/Zn Stabilizer** | 0,44 | 0,48 | 0,46 | 0,47 | 0,59 | 0,46 | 0,64 | 0,61 | 0,52 | 0,48 | 0,38 | 0,32 | 0,28 | 0,27 | 0,21 | 0,17 |
| **ABS** | | | | | | | | | | | | | 21,34 | - | 10,25 | 8,5 |
| **CPE** | | | | | | | - | - | | | | | | 21,36 | 10,25 | 8,5 |
| **Hazelnut shells** | - | 4,99 | - | 4,97 | | 5,07 | - | 5,00 | 10,50 | 19,00 | 35,05 | 45,09 | 35,00 | 35,01 | 44,54 | 53,98 |

It is understood that the compositions labelled "M1", "M3", "M5" and "M7" are outside the scope of the present invention, and are provided for comparative purpose only. The various compositions M1- M16 have been prepared by first mixing and blending in a mixer the solid particle of the mixture, i.e. the PVC matrix (A), the stabilizer agent (C) and, where present, the inorganic filler (E), with the exception of the vegetable filler (D) and, if present, the elastomer (F), until a temperature of about 60 - 70°C. At this point, the liquids, i.e, the plasticizer agent (B) and the co-stabilizer agent (E), are added to the mixture.

Upon the complete absorption of the liquids, at a temperature of 70 °C - 90 °C, the vegetable filler (D) and, if present, the elastomer (F) is added to the mixture, until a temperature of 100°C - 120 °C.

The compound is then cooled until a temperature of about 30°C - 50 °C and then extruded in a twin-screw counter-rotating extruder at a temperature of 160°C - 230 °C depending on the particular composition of the compound to be extruded.

For each compound of table 1, the Shore A hardness according to UNI EN ISO 868 and the specific weight (g/cm³) according to UNI EN ISO 1183 have been measured. The results are in the following table 2.

**TABLE 2**

| | **M1** | **M2** | **M3** | **M4** | **M5** | **M6** | **M7** | **M8** | **M9** | **M10** | **M11** | **M12** | **M13** | **M14** | **M15** | **M16** |
|---|---|---|---|---|---|---|---|---|---|---|---|---|---|---|---|---|
| **Hardness (Store A)** | 79 | 79 | 71 | 71 | 70 | 70 | 80 | 80 | 70 | 70 | 70 | 70 | 87 | 70 | 85 | 82 |
| **Specific weight(g/cc)** | 1,40 | 1,40 | 1,30 | 1,30 | 1,20 | 1,20 | 1,20 | 1,20 | 1,18 | 1,20 | 1,15 | 1,15 | 1,10 | 1,15 | 1,10 | 1,10 |

The comparison of the data in the tables 1 and 2 shows that, for the compositions M1-M8, for the same specific weight and Shore A hardness, the compositions M2, M4, M6 and M8 have an about 8% by volume less of products deriving from oil (the PVC matrix) or not renewable each year (the calcium carbonate) with respect to, respectively, the compositions M1, M3, M5 and M7. In other words, the compositions M2, M4, M6 and M8 have a lower environmental impact with respect to the compositions M1, M3, M5 and M8.

Furthermore, the tensile strength according to UNI EN ISO 527 of the compositions M1- M16 has been measured.

According to this known standard, the sample (having predetermined size) is stretched along its major axis at a constant rate until rupture. During the test the load supported by the sample and the elongation thereof is measured. The results of this test are shown in the following table 3.

**TABLE 3**

| | **M1** | **M2** | **M3** | **M4** | **M5** | **M6** | **M7** | **M8** | **M9** | **M10** | **M11** | **M12** | **M13** | **M14** | **M15** | **M16** |
|---|---|---|---|---|---|---|---|---|---|---|---|---|---|---|---|---|
| **Ultimate strength (Mpa)** | 10,32 | 6,82 | 892 | 6,92 | 1380 | 10,29 | 19,00 | 12,00 | 4,59 | 3,38 | 3,27 | 2,63 | 8,00 | 200 | 3,23 | 1,18 |
| **Elongation (%)** | 20B | 108 | 225 | 142 | 369 | 248 | 405 | 223 | 156 | 108 | 81 | 55 | 35 | 150 | 98 | 25 |

The comparison of the data in the tables 1, 2 and 3 unequivocally shows that, for the compositions M1-M8, for the same specific weight and Shore A hardness, the compositions M1, M3, M5 and M7 have an ultimate strength and an elongation that is more than, respectively, the compositions M2, M4, M6 and M8.

In other words, the compositions used in the present invention have an ultimate strength and an elongation that is less than, respectively, the conventional PVC compositions. However, it is possible to state that, for the purpose of the present invention, M2, M4, M6 and M8 have a good or very good ultimate strength and elongation.

The comparison of the samples M9 to M12 unequivocally shows that, as the amount of vegetable filler in the composition increases, the ultimate strength and/or the elongation decrease.

While the sample M9 shows a good ultimate strength and/or elongation and the samples M10 and M11 show an ultimate strength and/or an elongation that is still acceptable for the purpose of the present invention, the sample M12 has properties that are outside the purpose thereof. Therefore, the sample M12 does not fall within the scope of the present invention.

Without being bound by any theory, it can be established that a PVC compound including vegetable fillers showing both an ultimate strength and an elongation measured according to UNI EN ISO 527 less than, respectively, 3,00 Mpa and 60%, does not falls within the scope of the present invention.

On the other hand, a PVC compound including vegetable fillers showing either an ultimate strength or an elongation measured according to UNI EN ISO 527 less than, respectively, 3,00 Mpa and 60%, the other property showing a value that is more than the respective limit, falls within the scope of the present invention.

For example, both the samples M13 and M14 falls within the scope of the present invention. In fact, although the sample M13 shows a poor elongation (35%), it shows however a very good ultimate strength (8,00 Mpa). On the other hand, although the sample M14 shows a poor ultimate strength (2,00 Mpa), it shows however a very good elongation (150% Mpa).

The sample M15 shows a good elongation (98%) and a still acceptable ultimate strength (3,23 Mpa). Therefore, this sample is still within the scope of the present invention.

On the other hand, the sample M16 shows both a poor elongation (25%) and ultimate strength (1,18 Mpa). Therefore, this sample does not fall within the scope of the present invention.

Furthermore, the rheological behaviour of the compounds M1 to M4 has been investigated by using a Brabender® Plastographa® having a mixing chamber of 50 cc. For each compound, the torque vs. time diagram (so-called "plastogram") has been obtained.

The Brabender® Plastograph® has three main parts: a) a mixing chamber, b) a thermostat for temperature control, c) a device for setting and checking the speed of the rotors inside the mixing chamber. The instrument is interfaced with a computer and by the use of software it is possible to set some parameters and follow the time course of torque (Torque, a quantity related to the viscosity of the mass reaction in the molten state) and temperature during reactions. The Torque is the main indicator for monitoring the behaviour of the material during mixing. By monitoring the variations of torque it is possible to obtain information concerning possible degradation processes, cross-linking or degradation suffered by the polymer during mixing.

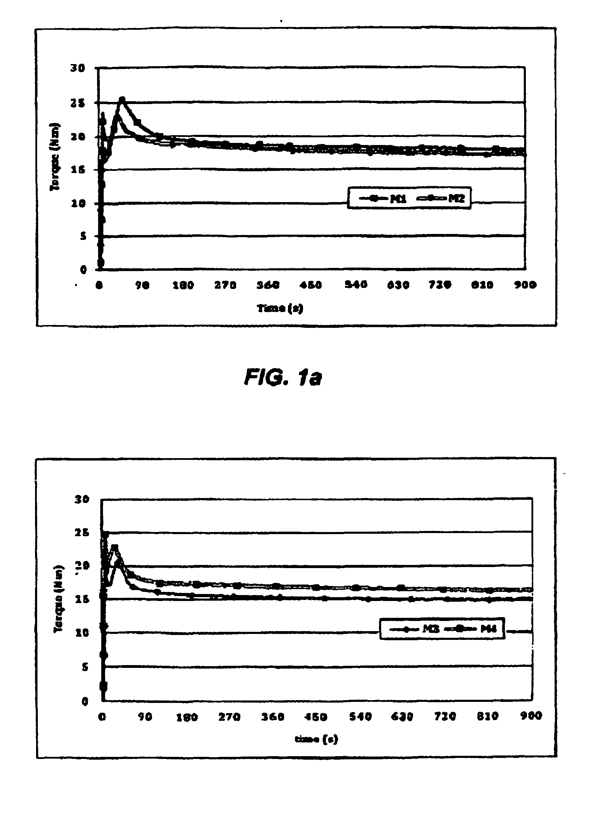

In figures 1a and 1b are shown the "plastodiagrams" of the compound M1-M4. In particular, the behaviour of the compounds M1-M2 (FIG. 1a) and M3-M4 (FIG. 1b) has been investigated.

As can be seen from these graphs, an anticipation of gelation can be noted for the compounds M2 and M4 if compared with, respectively, the compounds M1 and M3. The gelation time in minutes of each compound has been measured at 110°C and 40 rpm. The results are shown in the following table 4.

**TABLE 4**

| | **M1** | **M2** | **M3** | **M4** |
|---|---|---|---|---|
| Gelation time | 32 | 28 | 18 | 14 |

From the data shown in table 4, it is noticed that the gelation times of the compounds M2 and M4 is, respectively, 14% and 29% less with respect to the compound M1 and M3. This aspect is reflected positively in the production process of the compounds, because at the same rpm screw extruder it is possible to increase productivity for the compounds having the vegetable filler.

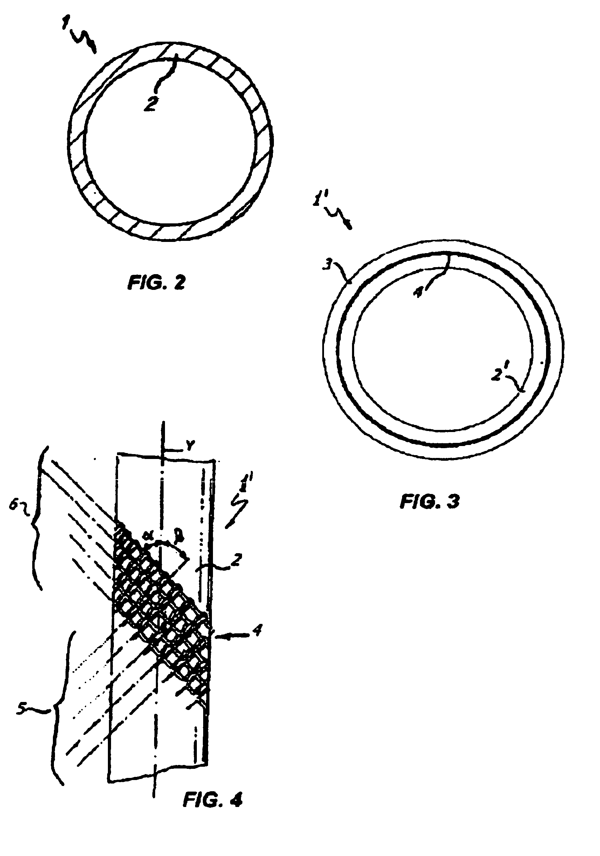

Figures 2 and 3 show various embodiments of a hose comprising at least one layer of a polymeric material which either comprises or is formed of the PVC compound material of the invention.

As shown in Figure 2, a hose **1** for carrying liquids such as, without limitation, a flexible hose, has at least one layer **2** of a thermoplastic polymeric material formed of the compound material of the invention. For example, the layer **2** can be made of a compound material having a composition corresponding to the above samples "M2", "M4", "M6", "M8", "M9", "M10", "M11", "M13", "M14" or "M15".

The hose **1** may be formed, for instance, by extrusion, in a *per se* known manner.

It shall be understood that the hose **1** may also include one or more layers applied to the inner and/or outer sides of the layer **2**, without departure from the scope of the present invention.

Figure 3 shows a further embodiment of a hose **1'** for carrying water, particularly a garden hose for irrigation of a meadow or the like.

The hose **1'** may have an inner layer **2'**, an outer layer **3** and a reinforcement layer **4** interposed therebetween.

The inner layer **2'** may be formed in a first polymeric material and the outer layer **3** may be formed in a second polymeric material.

Both the first and second polymer material can include, or may fully consist of, the PVC compound used in the present invention.

In a preferred but not exclusive embodiment, the first polymer material of the inner layer **2'** can include, or may consist of, a compound having the composition of the above sample labelled "M2" or "M8", while the second polymer material of the outer layer **3** can include, or may consist of, a compound having the composition of the above sample labelled "M6" or "M4".

On the other hand, the inner layer **2'** can be made of a compound having the composition of the above sample labelled "M2", "M8", "M13" or "M15", while the outer layer **3** can be made of a compound having the composition of the above sample labelled "M6", "M4" "M9" "M10". , "M11" or"M14".

The fibrous reinforcement layer **4** may have a spiral wrapped or mesh form with simple or double chain stitches, and may be formed in accordance with the teachings of patents EP-B1-0623776 or EP-B1-0960297, by the Applicant hereof.

Particularly, as shown in figure **4**, the chain-mesh fibrous layer **4** may have substantially parallel rows of stitches **5** and substantially parallel lines of stitches **6**.

Advantageously, the lines **6** and the rows **5** of stitches may be mutually inclined with respect to the longitudinal axis **Y** of the hose, at respective predetermined angles α, β.

In operation, the hose may be formed using well-known techniques, such as coextrusion.

## Claims

1. The use of a plasticized PVC compound consisting of:
(A) 20% to 80% by weight of a PVC matrix;
(B) 10% to 50% by weight of a plasticizer agent;
(C) 0,1% to 5% by weight of a stabilizer agent;
(D) 0,1% to 50% by weight of at least one vegetable filler;
(E) 0% to 50% by weight of at least one additive;
(F) 0% to 40% by weight of at least one elastomer compatible with said PVC matrix (A);
for manufacturing a flexible hose; wherein:
- the total of the percentages by weight of the components (A) to (F) is 100%;
- the compound has a Shore A hardness according to UNI EN ISO 868 of 60 to 90;
- said at least one vegetable filler (D) is 0,1% to 35% by weight if said elastomer (F) is 0% or less than 5% by weight;
- said vegetable filler (D) is 0,1% to 50% by weight if the elastomer (F) is 5% to 40% by weight.

2. Use as claimed in claim 1, wherein said at least one vegetable filler (D) represents in said compound material from 1% to 10% by weight, preferably from 3% to 7% by weight based on the total weight of the compound material.

3. Use as claimed in claim 1 or 2, wherein said at least one vegetable filler (D) is a flour and/or a granule and/or a fiber chosen among the group consisting of: nut, coconut, almond, hazelnut, wood, cork, rice, corn starch, abaca, agave, agave henequen, esparto grass, pineapple, bamboo, banana, betel nut, hemp, sunn hemp, cotton Java, Indian grass, broom, hibiscus, hibiscus cannabina, jute, flax rod, luffa (vegetable sponge), okra (bahmia), date palm (base of the leaf) oil palm, royal palm, switchgrass, Piassava, Ramie, or mixture or two or more thereof.

4. Use as claimed in claim 1, 2 or 3, wherein said at least one vegetable filler comprises vegetable wastes.

5. Use as claimed in claim 4, wherein said vegetable wastes are chosen among the group consisting of: nutshell, coconut shell, almond shell, hazelnut shell, recycled wood, cherry stones, pomace, rice hulls, or mixture or two or more thereof.

6. Use as claimed in one or more of the preceding claims, wherein said plasticizer agent (B) comprises at least one plasticizer free from phthalate compounds.

7. Use as claimed in one or more of the preceding claims, wherein said stabilizer agent (C) is of Ca-Zn, Ba-Zn, Ca - organic, Tin type, preferably of the Ca-Zn type including calcium stearate, zinc stearate and stearic acid.

8. Use as claimed in one or more of the preceding claims, wherein said at least one additive (E) are chosen among the group consisting of: co-stabilizers, inorganic fillers, heat stabilisers, UV stabilisers, external or internal lubricants, colorants, antioxidant agents, antimicrobial agents, anti-mold agents, anti-fungal agents, anti-bacteria agents, process adjuvants, blowing-expandent agents, chemical foaming agents, or mixture or two or more thereof.

9. Use as claimed in one or more of the preceding claims, wherein said at least one elastomer (F) compatible with the PVC matrix (A) is chosen among the group consisting of: ABS, CPE, EVA, CSM, MBS, TPU, Polyester Elastomers, PU, PMMA, PCL, or mixture or two or more thereof.

10. Use as claimed in one or more of the preceding claims, wherein said flexible hose is a spirally-shaped flexible hose or a reinforced flexible hose.

11. A flexible hose for carrying liquids, comprising at least one layer (2) made of a first thermoplastic polymer material consisting of the compound as claimed in one or more of claims 1 to 10.

12. Hose according to the preceding claim, wherein said at least one layer (2) is a first layer in contact with the liquid to be transported.

13. A garden hose comprising an inner layer (2'), an outer layer (3) and a fibrous reinforcing layer (4) therebetween, both said inner and outer layers (2', 3) being made of a material consisting of the PVC compound as claimed in one or more of claims 1 to 10.

14. The use according to one or more of the claims 1 to 10, wherein the plasticized PVC compound is prepared by a method comprising the steps of mixing and blending the starting components (A), (B), (C), (D) and possibly (E) and/or (F), at a first maximum operating temperature, cooling and extruding at a second maximum operating temperature, said step of mixing the vegetable filler (D) and possibly the elastomer (F) being accomplished only after the complete absorption of the plasticizer agent (B) by the PVC matrix (A), the stabilizer agent (C) and possibly the additives (E).

## Patentansprüche

1. Verwendung einer weichgemachten PVC-Verbindung, bestehend aus:
(A) 20 Gew.-% bis 80 Gew.-% einer PVC-Matrix;
(B) 10 Gew.-% bis 50 Gew.-% eines Weichmachers;
(C) 0,1 Gew.-% bis 5 Gew.-% eines Stabilisators;
(D) 0,1 Gew.-% bis 50 Gew.-% mindestens eines pflanzlichen Füllstoffs;
(E) 0 Gew.-% bis 50 Gew.-% mindestens eines Zusatzstoffs;
(F) 0 Gew.-% bis 40 Gew.-% mindestens eines Elastomers, das mit der PVC-Matrix (A) kompatibel ist;
zur Herstellung eines flexiblen Schlauchs; wobei:
- die Gesamtheit der Gewichtsprozentangaben der Bestandteile (A) bis (F) 100 % beträgt;
- die Verbindung eine Shore-A-Härte gemäß UNI EN ISO 868 von 60 bis 90 aufweist;
- der mindestens eine pflanzliche Füllstoff (D) 0,1 Gew.-% bis 35 Gew.-% beträgt, wenn das Elastomer (F) 0 Gew.-% oder weniger als 5 Gew.-% beträgt;
- der pflanzliche Füllstoff (D) 0,1 Gew.-% beträgt, wenn das Elastomer (F) 5 Gew.-% bis 40 Gew.-% beträgt.

2. Verwendung nach Anspruch 1, wobei der mindestens eine pflanzliche Füllstoff (D) in dem Verbundmaterial bezogen auf das Gesamtgewicht des Verbundmaterials von 1 Gew.-% bis 10 Gew.-%, vorzugsweise von 3 Gew.-% bis 7 Gew.-% darstellt.

3. Verwendung nach Anspruch 1 oder 2, wobei der mindestens eine pflanzliche Füllstoff (D) ein Mehl und/oder eine Granalie und/oder eine Faser ist, die ausgewählt ist aus der Gruppe, bestehend aus: Nuss, Kokosnuss, Mandel, Haselnuss, Holz, Kork, Reis, Maisstärke, Abaka, Henequén-Agave, Espartogras, Ananas, Bambus, Banane, Betelnuss, Hanf, Sunn-Hanf, Java-Baumwolle, indischem Gras, Ginster, Hibiskus, Hibiscus cannabinus, Jute, Flachsstengel, Luffa (pflanzlicher Schwamm), Okra (Bahmia), Dattelpalme (Blattgrund), Ölpalme, Königspalme, Rutenhirse, Piassava, Ramie oder Mischungen oder zwei oder mehreren davon.

4. Verwendung nach Anspruch 1, 2 oder 3, wobei der mindestens eine pflanzliche Füllstoff pflanzliche Abfälle umfasst.

5. Verwendung nach Anspruch 4, wobei die pflanzlichen Abfälle ausgewählt sind aus der Gruppe, bestehend aus: Nussschale, Kokosnussschale, Mandelschale, Haselnussschale, recyceltem Holz, Kirschkernen, Trester, Reishülsen oder Mischungen oder zwei oder mehreren davon.

6. Verwendung nach einem oder mehreren der vorherigen Ansprüche, wobei der Weichmacher (B) mindestens einen Weichmacher umfasst, der frei von Phthalatverbindungen ist.

7. Verwendung nach einem oder mehreren der vorherigen Ansprüche, wobei der Stabilisator (C) vom Typ organisches Ca-Zn, Ba-Zn, Ca, Zinn, vorzugsweise vom Typ Ca-Zn ist, der Kalziumstearat, Zinkstearat und Stearinsäure aufweisen kann.

8. Verwendung nach einem oder mehreren der vorherigen Ansprüche, wobei der mindestens eine Zusatzstoff (E) ausgewählt ist aus der Gruppe, bestehend aus: Co-Stabilisatoren, anorganischen Füllstoffen, Wärmestabilisatoren, UV-Stabilisatoren, externen oder internen Schmiermitteln, Farbstoffen, Antioxidationsmitteln, antimikrobiellen Mitteln, Fäulnisverhütungsmitteln, Pilzbefallverhütungsmitteln, antibakteriellen Mitteln, Prozesshilfsmitteln, Treib-/Quellmitteln, chemischen Schäumungsmitteln oder Mischungen oder zwei oder mehrere davon.

9. Verwendung nach einem oder mehreren der vorherigen Ansprüche, wobei das mindestens eine Elastomer (F), das mit der PVC-Matrix (A) kompatibel ist, ausgewählt ist aus der Gruppe, bestehend aus: ABS, CPE, EVA, CSM, MBS, TPU, Polyesterelastomeren, PU, PMMA, PCL oder Mischungen oder zwei oder mehreren davon.

10. Verwendung nach einem oder mehreren der vorherigen Ansprüche, wobei der flexible Schlauch ein spiralförmiger flexibler Schlauch oder ein verstärkter flexibler Schlauch ist.

11. Flexibler Schlauch zum Befördern von Flüssigkeiten, umfassend mindestens eine Schicht (2), die aus einem ersten thermoplastischen Polymermaterial hergestellt ist, das aus der Verbindung nach einem oder mehreren der Ansprüche 1 bis 10 besteht.

12. Schlauch nach dem vorhergehenden Anspruch, wobei die mindestens eine Schicht (2), eine erste Schicht in Kontakt mit der Flüssigkeit zu transportierenden ist.

13. Gartenschlauch, umfassend eine innere Schicht (2'), eine äußere Schicht (3) und eine Faserverstärkungsschicht (4) dazwischen, wobei sowohl die innere als auch die äußere Schicht (2', 3) aus einem Material hergestellt sind, das aus der PVC-Verbindung nach einem oder mehreren der Ansprüche 1 bis 10 besteht.

14. Verwendung nach einem oder mehreren der Ansprüche 1 bis 10, wobei die weichgemachte PVC-Verbindung durch ein Verfahren hergestellt wird, das die Schritte Mischen und Vermengen der Ausgangsbestandteile (A), (B), (C), (D) und möglicherweise (E) und/oder (F) bei einer ersten maximalen Betriebstemperatur, Abkühlen und Extrudieren bei einer zweiten maximalen Betriebstemperatur umfasst, wobei der Schritt des Mischens des pflanzlichen Füllstoffs (D) und möglicherweise des Elastomers (F) nur nach der vollständigen Absorption des Weichmachers (B) von der PVC-Matrix (A), dem Stabilisator (C) und möglicherweise den Zusatzstoffen (E) erreicht wird.

## Revendications

1. Utilisation d'un composite de PVC plastifié comprenant:
(A) 20% à 80% en poids d'une matrice de PVC;
(B) 10% à 50% en poids d'un agent plastifiant;
(C) 0,1% à 5% en poids d'un agent stabilisateur;
(D) 0,1% à 50% en poids d'au moins un agent de remplissage végétal;
(E) 0% à 50% en poids d'au moins un additif;
(F) 0% à 40% en poids d'au moins un élastomère compatible avec ladite matrice de PVC (A);
pour la fabrication d'un tuyau flexible, dans lequel:
- la somme des pourcentages en poids des composants (A) à (F) est de 100%;
- le composite a une dureté Shore A mesurée selon la norme UNI EN ISO 868 de 60 à 90;
- ledit au moins un agent de remplissage végétal (D) est de 0,1% à 35% en poids si ledit élastomère (F) est de 0% ou moins de 5% en poids;
- ledit agent de remplissage végétal (D) est de 0,1% à 50% en poids si l'élastomère (F) est de 5% à 40% en poids.

2. Utilisation selon la revendication 1, dans lequel ledit au moins un agent de remplissage végétal (D) représente dans ledit composite de 1% à 10% en poids, de préférence de 3% à 7% en poids par rapport au poids total du composite.

3. Utilisation selon la revendication 1 ou 2, dans lequel ledit au moins un agent de remplissage végétal (D) est une farine et/ou un granulé et/ou une fibre choisie parmi le groupe constitué par: noix, noix de coco, amande, noisette, bois, liège , riz, amidon de maïs, abaca, agave, agave sisal, alfa, ananas, bambou, banane, noix de bétel, chanvre, chanvre sunn, coton Java, herbe indienne, genêts, hibiscus, hibiscus cannabina, jute, tige du lin, luffa (éponge végétale), gombo (bahmia), palmier dattier (base de la feuille), palmier à huile, palmier royal, panic érigé, piassava, ramie, ou des mélanges de deux ou plusieurs de ceux-ci.

4. Utilisation selon la revendication 1, 2 ou 3, dans lequel un agent de remplissage végétal comprend des déchets végétaux.

5. Utilisation selon la revendication 4, dans lequel lesdits déchets végétaux sont choisis parmi le groupe constitué par: coquille de noix, coquille de noix de coco, coquille d'amande, coquille de noisette, bois recyclé, noyaux de cerises, marc de raisin, balle du riz, ou des mélanges de deux ou plusieurs de ceux-ci.

6. Utilisation selon une ou plusieurs des revendications précédentes, dans lequel ledit agent plastifiant (B) comprend au moins un plastifiant sans phtalate.

7. Utilisation selon une ou plusieurs des revendications précédentes, dans lequel ledit agent stabilisateur (C) est de du type Ca-Zn, Ba-Zn, Ca-organique ou étain, de préférence du type Ca-Zn comprenant le stéarate de calcium, stéarate de zinc et l'acide stéarique.

8. Utilisation selon une ou plusieurs des revendications précédentes, dans lequel ledit au moins un additif (E) est choisi parmi le groupe constitué par: co-stabilisateurs, agents de remplissage inorganiques, stabilisateurs thermiques, des stabilisateurs UV, lubrifiants internes ou externes, colorants, antioxydants, agents antimicrobiens, agents anti-moisissure, agents antifongiques, agents antibactériens, adjuvants de préparation, agents de soufflage, agents chimiques moussants ou des mélanges de deux ou plusieurs de ceux-ci.

9. Utilisation selon une ou plusieurs des revendications précédentes, dans lequel ledit au moins un élastomère (F) compatible avec la matrice de PVC (A) est choisi parmi le groupe constitué par: ABS, CPE, EVA, CSM, MBS, TPU, Polyester élastomères, polyuréthane, PMMA, PCL ou des mélanges de deux ou plusieurs de ceux-ci.

10. Utilisation selon une ou plusieurs des revendications précédentes, dans lequel ledit tuyau flexible est un tuyau flexible spiralé ou un tuyau flexible renforcé.

11. Tuyau flexible pour le transport de liquides, comprenant au moins une couche (**2**) en un premier matériau polymère thermoplastique qui consiste du composite selon l'une ou plusieurs des revendications 1 à 10.

12. Tuyau selon la revendication précédente, dans lequel ladite au moins une couche (**2**) est une première couche en contact avec le liquide à transporter.

13. Tuyau d'arrosage comprenant une couche intérieure (**2'**), une couche extérieure (**3**) et une couche de renforcement fibreux (**4**) entre elles, lesdites couches intérieure et extérieure (**2', 3**) étant toutes les deux en matériau qui consiste du composite de PVC selon l'une ou plusieurs des revendications 1 à 10.

14. Utilisation selon une ou plusieurs des revendications 1 à 10, dans lequel le composite de PVC plastifié est préparé par un procédé comprenant les étapes consistant à incorporer et à mélanger les composés de départ (A), (B), (C), (D) et éventuellement (E) et/ou (F), à une première température de préparation maximale, à refroidir et a extruder à une seconde température maximale de préparation, ladite étape de incorporer l'agent de remplissage végétal (D) et éventuellement l'élastomère (F) étant réalisée uniquement après l'absorption complet de la matrice de PVC (A), de l'agent plastifiant (B), de l'agent stabilisateur (C) et éventuellement des additifs (E).
